# EUROPEAN PATENT SPECIFICATION

(11) **EP 0 682 080 B1**
(45) Date of publication and mention of the grant of the patent: **24.03.1999**
(21) Application number: 94303336.5
(22) Date of filing: 09.05.1994
(51) Int. Cl.: C08L 67/02

(54) **Polyester resin composition for blowing or extrusion and hollow molded article made therefrom**
Polyesterharzzusammensetzungen für Blasformen oder Extrusionen und daraus geformter Hohlkörper
Composition de polyester pour soufflage ou extrusion et article creux moulé à partir de celle-ci

(43) Date of publication of application: 15.11.1995
(73) Proprietor: POLYPLASTICS CO. LTD., Chuo-Ku Osaka-shi Osaka 541 (JP)
(72) Inventor: Shiwaku, Toshio, Fuji-shi, Shizuoka (JP); Furui, Kenji, Fuji-shi, Shizuoka (JP); Suzuki, Masato, Ihara-gun, Shizuoka (JP); Hijikata, Kenji, Mishima-shi, Shizuoka (JP)
(74) Representative: Jackson, Peter

(56) References cited:
- EP-A- 0 481 471
- EP-A- 0 492 976
- EP-A- 0 584 953
- US-A- 4 900 788
- DATABASE WPI Week 8609, Derwent Publications Ltd., London, GB; AN 86-059735 & JP-A-61 012 745 (TORAY IND. INC.) 21 January 1986

## Description

### [Field of the Invention]

The present invention relates to a polyester resin composition suitable for blowing or extrusion and a hollow molded article made by the blowing, etc., of the composition.

### [Description of the Related Art]

Thermoplastic polyester resins, such as a polybutylene terephthalate resin, have excellent mechanical strength, heat resistance, chemical resistance and electrical properties in good balance, so that they are widely utilized as a representative engineering plastic. Although, for the most part, the resin is molded by injection, a recent tendency toward the use of the polyester resin for more advanced and specialized purposes leads to the expectation to obtain hollow molded articles by efficiently and economically conducting the blowing, etc., of the polyester resin.

For example, the pipes and tanks used in the engine room of an automobile are put in a high temperature environment, and also they must have high levels of mechanical properties. Thus, they have been made exclusively from metals. However, for attaining weight decrease, corrosion prevention and processing cost reduction, it is now demanded to obtain them by the blowing of the above thermoplastic polyester resin having excellent properties.

Despite the above demand, it is extremely difficult to obtain a molding with a desired shape by blowing because the melt tension, which is generally regarded as the most important property in the application of blowing technique, of the polyester resin is so low that the drawdown thereof is marked. As providing improvement, various methods have been proposed, which include a method in which use is made of a polyester resin with a high polymerization degree and a high intrinsic viscosity, a method in which use is made of a branched polyester, and a method in which various fillers are added. However, all of these proposed methods have less improvement effects, and the proposed materials are unsatisfactory for use in the blowing.

Further, a method has been proposed in which a polyester resin is blended with a branching agent, such as an isocyanate or epoxy compound, or with a copolymer of ethylene and an α, β-unsaturated glycidyl ester to thereby increase the melt tension, thus improving the drawdown resistance. However, the effect achieved by the method is also not satisfactory, and the method has a drawback in that the moldability is so unstable that it is difficult to obtain uniform excellent moldings.

The present inventors found that the blending of a specific styrenic copolymer was effective in improving the melt tension, and thus the drawdown resistance, of the polyester resin. Based on the finding, they made proposals as disclosed in Japanese Patent Application Nos. 275477/1991, 106706/1992 and 16220/1992. The resin compositions proposed therein have satisfactory melt tensions, are less in the drawdown of parisons to exhibit excellent blow moldability, and provide hollow molded articles having excellent molding surfaces.

However, the present inventors have made detailed studies, and, as a result, they have found that, as a hollow molded article or unnecessary parts are pulverized and processed for reuse, the melt tension of the above resin composition is likely to decrease to thereby cause the drawdown of parisons, so that the blow moldability is gradually lowered. Thus, it has been found that, in this respect, improvement is desired from the economic point of view.

### [Summary of the Invention]

The present inventors have further studied with a view toward achieving improvement in the above respect, particularly with a view towards developing a resin composition for blowing which can exhibit a sufficiently high melt tension and excellent drawdown resistance even after repeated recycling of blow molded articles. As a result, they have found that the above desired improvement is attained, stable blow mold-ability is ensured and marked effects are realized in economy and the reduction of the volume of wasted resin, by employing a polyolefin resin (component (C) in the present invention), one modified with an aromatic polyacrylamide containing a specific glycidly group, in combination with the styrenic polymer used as an ameliorant in the above cited references including The Japanese Patent Application No. 275477/1991. Based on this finding, the present invention has been made.

Therefore, according to the present invention, there is provided a polyester resin composition for blowing or extrusion which is prepared by melt-kneading a mixture comprising or essencialy consisting of
(A) 100 parts by weight of a thermoplastic polyester resin prepared mainly from an aromatic dicarboxylic acid or an ester-forming derivative thereof and an aliphatic dihydroxyl compound having 2 to 8 carbon atoms,
(B) 2.0 to 10 parts by weight of a styrenic copolymer comprising 40 to 97% by weight of styrene, 60 to 3% by weight of a glycidyl ester of an α, β-unsaturated acid represented by the following general formula (I), and 0 to 50% by weight of other vinylic monomer: 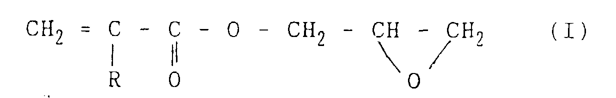 wherein R is a hydrogen atom or an alkyl group,
(C) 1 to 30 parts by weight of a modified polyolefin resin prepared by heating a mixture comprising 100 parts by weight of a polyolefin resin, 0.1 to 15 parts by weight of a glycidyl compound represented by the following general formula (II) 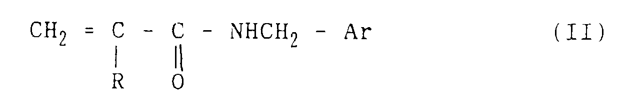 wherein R is a hydrogen atom or an alkyl group,
   and Ar is an aromatic group having at least one glycidyl group,
   and 0.01 to 1.5 parts by weight of a radical polymerization initiator,
   and
(D) 0 to 100 parts by weight of at least one fibrous, powdery or flaky filler. Further, according to the present invention, there is provided a hollow molded article prepared by blowing the polyester resin composition as set forth above.

### [Detailed Description of the Invention]

The particulars of the components of the composition according to the present invention will now be described.

The thermoplastic polyester resin (A) to be used in the present invention is a polyester prepared mainly from an aromatic dicarboxylic acid or an ester-forming derivative thereof and an aliphatic dihydroxyl compound having 2 to 8 carbon atoms through polycondensation. The present invention is effective for both of homopolyesters and copolyesters.

The aromatic dicarboxylic acid compound used in the preparation of the thermoplastic polyester resin (A) is, for example, at least one member selected from among conventional aromatic dicarboxylic acids, such as terephthalic acid, isophthalic acid, naphthalenedicarboxylic acid and diphenyldicarboxylic acid, and their ester-forming derivatives. In particular, it is preferred that the aromatic dicarboxylic acid be mainly composed of terephthalic acid or its ester-forming derivatives.

Examples of the aliphatic dihydroxyl compounds each having 2 to 8 carbon atoms used as the other major component of the polyester (A) in the present invention include aliphatic dihydroxyl compounds, such as ethylene glycol, propylene glycol, butanediol, neopentyl glycol, hexanediol, cyclohexanediol, cyclohexanedimethanol, diethylene glycol and triethylene glycol, and derivatives thereof. In particular, it is preferred that the dihydroxyl compound be mainly composed of an aliphatic dihydroxyl compound having 2 to 4 carbon atoms.

As the comonomer for preparing the copolyester (A), in addition to the above monomers, use may be made of a dicarboxylic acid selected from among diphenyl ether dicarboxylic acid, α, β-bis(4-carboxyphenoxy)ethane, adipic acid, sebacic acid, azelaic acid, decanedicarboxylic acid, dodecanedicarboxylic acid, cyclohexanedicarboxylic acid and dimer acids, an ester-forming derivative thereof, a glycol selected from among pentanediol, neopentyl glycol, hexanediol, octanediol, decanediol, cyclohexanedimethanol, hydroquinone, bisphenol A, 2,2-bis(4'-hydroxyethoxyphenyl)propane, xylene glycol, polyethylene glycol, polytetramethylene glycol and aliphatic polyester oligomers each having hydroxyl groups at both of its terminals, a hydroxycarboxylic acid selected from among glycolic acid, hydroxy acid, hydroxybenzoic acid, hydroxyphenylacetic acid and naphthylglycolic acid, or a lactone compound selected from among propiolactone, butyrolactone, caprolactone, valerolactone and caprolactone.

Also, a branched or crosslinked polyester may be used which is prepared by using a polyfunctional ester-forming component, such as trimethylolpropane, trimethylolethane, pentaerythritol, trimellitic acid, trimesic acid and pyromellitic acid, in an amount within which the thermoplasticity of the polyester is retained. Further, the polyester may be one prepared using an ester-forming component having an ionic group, such as sulfoisophthalic acid and sodium p-hydroxyethylphenylsulfonate.

Still further, the polyester resin for use in the present invention may be a halogenated copolyester prepared using a compound having not only an aromatic nucleus having a halogenous compound as a substituent but also an ester-forming group, such as dibromoterephthalic acid, tetrabromoterephthalic acid, tetrachloroterephthalic acid, 1,4-dimethyloltetrabromobenzene, tetrabromobisphenol A and ethylene or propylene oxide adducts of tetrabromobisphenol A.

The above polyesters may be used either individually or in combination.

Polybutylene terephthalate and copolymers composed mainly of the same are especially preferred among the above polyester resins. Especially preferred comonomers for preparing the above copolymers include, for example, isophthalic acid, ethylene glycol, bisphenol A, cyclohexanedimethanol, 2,2-bis(β-hydroxyethoxyphenyl)propane, 2,2-bis(β-hydroxyethoxytetrabromophenyl)propane and polytetramethylene glycol. The especially preferred polyester resins further include the above appropriately branched or crosslinked polybutylene terephthalate copolymers each obtained by polycondensation using a small amount of a comonomer having at least three ester-forming functional groups. Further, polyethylene terephthalate polymers and copolymers are suitable as the component (A) for use in the present invention. Still further, mixtures comprising the polybutylene terephthalate polymer and the polyethylene terephthalate polymer in arbitrary proportions are also especially preferred as the component (A) for use in the present invention.

The viscosity of the polyester (A) used in the present invention is not particularly limited as long as the composition can be molded by injection. Generally, polyesters having an intrinsic viscosity of 0.6 to 2.0 are used. Even if the viscosity of the polyester is very low, the addition of the components (B) and (C) renders the blowing of the composition feasible to thereby markedly improve the moldability thereof. However, if the viscosity of the polyester itself is extremely high, the fluidity of the composition becomes disadvantageously low.

The styrenic copolymer as the component (B) in the present invention, upon being blended with the base polyester resin (A), exerts the effect of improving the melt tension and suppressing the drawdown to thereby markedly improve the blow moldability of the composition. The styrenic copolymer as the component (B) comprises 40 to 97% by weight of styrene and 60 to 3% by weight of a glycidly ester of an α, β-unsaturated acid represented by the following general formula (I). 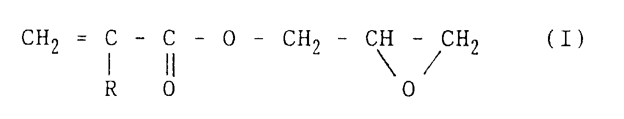 wherein R is a hydrogen atom or an alkyl group.

When the content of units of a glycidly ester of an α, β-unsaturated acid represented by the general formula (I) is too high, unfavorably, the composition is likely to gell to cause problems in the blow moldability and degrade the surface condition of the molding. On the other hand, when the content is too low, the effect of improving blowing characteristics, such as melt tension and drawdown resistance, cannot be exerted. Accordingly, the content thereof in the component (B) is limited to 60 - 3% by weight. Preferably, it is in the range of 50 to 5% by weight.

The units of a glycidly ester of an α, β-unsaturated acid represented by the general formula (I) are, for example, units of glycidly acrylate, methacrylate, ethacrylate and itaconate. Especially, glycidly methacrylate units are preferred.

The styrenic copolymer (B) may be a multicomponent copolymer obtained by copolymerizing at least one other vinylic monomer together with the above two components. As this third component, acrylonitrile, vinyl chloride, α-methylstyrene, bromostyrene and phenylmaleimide can suitably be employed. Of these, acrylonitrile is the most suitable as the third component. Terpolymers comprising acrylonitrile in amount of 50% by weight or less, preferably 40% by weight or less, have a higher effect of improving blowing characteristics. The multicomponent copolymer may comprise a small amount of a vinylic monomer other than those mentioned above as an auxiliary component. However, the incorporation of an olefinic component, such as ethylene, propylene or butene-1, into the copolymer rather reduces the desired effect unfavorably.

The styrenic copolymer as the component (B) is compounded into the composition in an amount of 0.2 to 10 parts by weight, preferably 0.5 to 5 parts by weight per 100 parts by weight of the component (A). When the amount is too small, the blowability desired in the present invention cannot be realized. On the other hand, when the amount is too large, the resin composition gels unfavorably.

The styrenic copolymer as the component (B) in the present invention can readily be prepared by the customary polymerization of the above component monomers in the presence of a radical polymerization initiator.

The copolymer as the component (B) in the present invention may be a graft copolymer comprising a linear copolymer having a small amount of a vinylic polymer chemically bonded thereto in a branching or crosslinking form. As a vinylic monomer for forming segments composing such a branch or crosslink, there may be mentioned acrylic acid, an alkyl acrylate, methacrylic acid, an alkyl methacrylate, styrene and acrylonitrile. The above branched or crosslinked graft copolymer can be obtained, for example, by copolymerizing at least one member selected from among the above vinylic monomers and a radical polymerizable organic peroxide in the presence of the above linear copolymer to produce a peroxidic copolymer and then melt-kneading the peroxidic copolymer while heating. In this respect, however, the component (B) used in the present invention, at least itself, must be a material having fluidity at the melt-kneading temperature. It is desirable to employ the component (B) having a melt viscosity lower than that of the polyester resin (A) at the melt-kneading temperature. It is especially preferred that the viscosity of the component (B) be not greater than 1/2 of that of the component (A). If the component (B) has high molecular weight and thus high melt viscosity or is highly grafted, unfavorably, it has poor fluidity and exhibits poor dispersibility in the polyester resin (A) to thereby reduce the effect of improving blowing characteristics, such as melt tension and drawdown resistance, and also degrade the surface condition of the molded article.

The modified polyolefin resin used as the component (C) in the present invention has the effect of markedly obviating the degradation of the blowing characteristics, such as melt tension and drawdown resistance, during the pulverization and reblowing of unnecessary materials occurring at the time of blowing or blow molded articles themselves. Therefore, the component (C) constitutes a characteristic feature of the present invention, together with the component (B).

The modified polyolefin resin as the component (C) is one prepared by mixing a polyolefin resin with an aromatic acrylamide compound having a glycidly group as a modifier, represented by the following general formula (II) 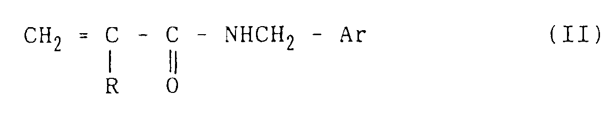 wherein R is a hydrogen atom or an alkyl group,
and Ar is an aromatic group having at least one glycidly group,
and heating the mixture in the presence of a radical polymerization initiator.

Examples of the polyolefin resins used in the preparation of the modified polyolefin resin (C) include polypropylene, polyethylene, polymethylpentene and polybutene, and also include copolymers mainly composed of the above polymers, such as ethylene/ propylene copolymers and ethylene/propylene/diene copolymer. The copolymers may comprise non-olefinic monomers. These polyolefin resins may be used either individually or in combination. In particular, when polypropylene or polymethylpentene is employed, the toughness of the desired polyester resin composition is effectively improved without detriment to the stiffness thereof.

The modifier of the formula (II) used in the preparation of the modified polyolefin resin (C) can be produced by the method described in, for example, JP-A No. 60-130580. For example, it is produced by reacting N-methylol-acrylamide with 2,6-xylenol until dehydration and condensation are effected, and further reacting the resultant precursor with epichlorohydrin until dehydrochlorination and epoxidization are effected.

Representative example of the above compound of the formula (II) is N-[4-(2,3-epoxypropoxy)-3,5-dimethylbenzyl]-acrylamide.

The amount of the glycidyl compound modifier of the formula (II) is in the range of 0.1 to 15 parts by weight, preferably 4 to 14 parts by weight per 100 parts by weight of the polyolefin resin. When the amount is too small, the effect of improving blowing characteristics in the recycling of blow molded articles is likely to be poor. On the other hand, when the amount is too large, the melt viscosity of the composition is likely to become so high that the entire resin composition gels to thereby cause inconveniences in molding operation.

The radical polymerization initiator used in the preparation of the modified polyolefin resin (C) is not particularly limited as long as it generates free radicals at the melt-kneading temperature. Although the conventional radical polymerization initiators may be used, preferred are those having a 1-min half-life temperature of 130°C or higher. Examples of such radical polymerization initiators include dicumyl peroxide, t-butyl cumyl peroxide, 2,5-dimethylhexane 2,5-dihydroperoxide, di-t-butyl peroxide, t-butyl cumyl peroxide, 2,5-dimethyl-2,5-di(t-butylperoxy)hexane, 2,5-dimethyl-2,5-di)(t-butylperoxy)-hexyne-3, n-butyl 4,4-bis(t-butylperoxy)valerate, 2,3-dimethyl-2,3-diphenylbutane, 2,3-diethyl-2,3-diphenylbutane, 2,3-dimethyl-2,3-di(p-methylphenyl)-butane 2,3-dimethyl-di(bromophenyl)butane. These may be used in combination.

The radical polymerization initiator is added in an amount of 0.01 to 1.5 parts by weight, preferably 0.1 to 1.0 part by weight per 100 parts by weight of the polyolefin resin. When the amount of the added radical polymerization initiator is too small, the modification of the polyolefin resin is unsatisfactory. On the other hand, when it is too large, unfavorably, foaming is likely to occur at the time of the modification of the polyolefin resin to cause problems.

The modified polyolefin resin as the component (C) is prepared by mixing the above components together and heating the mixture. For example, the modified polyolefin resin can be obtained either by mixing the above components and catalyst into an inert solvent and heating the mixture, or by melt-kneading the components and catalyst in the conventional kneader, such as an extruder or Brabender mixer. The temperature at which the melt-kneading is performed is generally 5 to 100°C, preferably 10 to 60°C higher than the melting point of the resin component. When the melt-kneading temperature is too high, unfavorable resin decomposition and abnormal reaction are likely to occur. The melt-kneading time is at least 20 sec but up to 15 min, preferably in the range of 30 sec to 10 min.

The modified polyolefin resin used as the component (C) in the present invention may also be either a linear copolymer or a graft copolymer chemically bonded in a branching or crosslinking form. As int eh component (B), it is preferred that the component (C) have high fluidity. The component (C) is added in an amount of 1 to 30 parts by weight per 100 parts by weight of the component (A). When the amount is too small, satisfactory melt tension cannot be obtained in the recycling of blow molded articles. On the other hand, when the amount is too large, the entire resin composition gels unfavorably.

In the present invention, a specific reaction accelerator (E) for epoxy groups, which is not necessarily an essential component, may be employed in combination with the above components (B) and (C) to be melt-kneaded into the polyester resin (A). Thus, a composition having an enhanced effect can be obtained.

Examples of such reaction accelerators (E) for epoxy groups include:
(1) tertiary amines, such as dimethylbenzyl-amine, tri(hexyl), tri(amyl)amine, tris(dimethylaminomethyl)phenol and 1,8-diazabicyclo(5.4.0)undecane;
(2) tertiary amine salts, such as tetramethylammonium chloride, tetraethylammonium chloride, tetrabuthylammonium chloride, trimethylbenzylammonium chloride, triethylbenzylammonium chloride and tripropyl-benzylammonium chloride;
(3) imidazole compounds, such as 2-methylimidazole, 2-ethylimidazole, 2-isopropylimidazole, 2-phenylimidazole and cyanoethylimidazole;
(4) imidazole salts prepared from the above imidazole compounds and trimellitic and isocyanuric acids;
(5) phosphonium slats, such as tetramethylphosphonium bromide, tetrabutylphosphonium benzotriazolate and tetrabutylphosphonium bromide; and
(6) organometallic complexes, such as dibutyltin dilaurate and butoxyamino titanate.

The above reaction accelerator (E) for epoxy groups is added in an amount of 6% by weight or less, preferably 0.05 to 3% by weight, based on the sum total of the components (B) and (C). The above examples of the reaction accelerators for epoxy groups may be used either individually or in combination.

The acids generally known as catalysts for the reaction of epoxy groups, e.g., strongly acidic organosulfonic acids, accelerate the deterioration of the polyester unfavorably.

The polyester resin composition for blowing or extrusion according to the present invention may further comprise a fibrous, powdery or flaky filler as the component (D) in conformity with the object of use thereof. This filler is effective in providing the molded article with desirable mechanical properties, especially strength and stiffness.

As the fibrous filler, there may be mentioned inorganic fibrous materials, which include, for example, fibers of glass, asbestos, carbon, silica, silica/alumina, zirconia, boron nitride, silicon nitride, boron and potassium titanate, and also include fibrous materials of metals, such as stainless steel, aluminum, titanium, copper and brass. The particularly representative fibrous filler is glass fiber.

Examples of the powdery fillers include powders of carbon black; silicates such as silica, quartz, glass (also beads of glass), calcium silicate, aluminum silicate, kaoline, talc, clay, diatom earth and wollastonite; metal oxides such as iron oxide, titanium oxide, zinc oxide and alumina; metal carbonates such as calcium and magnesium carbonates; metal sulfates such as calcium and barium sulfates; silicon carbide, silicon nitride, boron nitride and various metals.

Examples of the flaky fillers include mica, glass flake and various metal foils.

The above inorganic fillers may be used either individually or in combination. The use of a fibrous filler, especially glass fiber, in combination with a powdery or flaky filler represents a combination desirable from the viewpoint of giving a molded article all of mechanical strength, dimensional accuracy and electrical properties. Further, especially, it is effective in improving blowing characteristics.

In the use of te above filler, it is desirable to apply a binder or a surface treatment. Examples thereof include epoxy, isocyanate, titanate, silane and other functional compounds.

The filler used as the component (D) in the present invention is added in an amount not greater than 100 parts by weight, preferably not greater than 70 parts by weight per 100 parts of the polyester (A). When the amount is too small, the composition is likely to have low stiffness and strength. On the other hands, when the amount exceeds 100 parts by weight, unfavorably, molding operation would have problems.

The polyester resin composition of the present invention may comprise another thermoplastic resin in addition to the above components.

The above other thermoplastic resin is not particularly limited as long as it is stable at high temperatures. Examples of such other thermoplastic resins include polyamide polymers, styrenic (co)polymers other than those described above, polycarbonate, polyphenylene oxide, polyalkyl acrylates, polyacetals, polysulfones, polyethersulfones, polyether-imides, polyether-ketones and fluorinated resins. These thermoplastic resins may be used either individually or in combination.

As preferred thermoplastic resins among the above, polyamide resins (F) may be mentioned, which include nylon 6, nylon 66, nylon 12 and copolymers thereof. These polyamide resins are each added in an amount not greater than 100 parts by weight per 100 parts by weight of the component (A). Preferably, the amount is not greater than 60 parts by weight. The polyamide resin is effective in increasing the melt tension, stabilizing the parison and improving the drawdown resistance. However, when the amount is too large, unfavorably, the properties of the component (A) resin cannot be fully exhibited.

In conformity with the required performance, the polyester resin composition of the present invention may still further comprise conventional substances generally incorporated in synthetic resins, for example, a stabilizer such as an antioxidant and an ultraviolet absorber, an antistatic agent, a flame retarder, a colorant such as a dye and a pigment, a lubricant, a mold releasing agent, a crystallization accelerator a nucleating agent.

The composition of the present invention amy be prepared by blending the styrenic copolymer (B) and the modified polyolefin resin (C) with the polyester resin (A), melt-kneading the blend, optionally adding the components (C) and (E) and other desirable components, and melt-kneading the blend. Then, the composition is blown. The components may be melt-kneaded by means of a single or twin screw extruder, pelletized and then blown. Alternatively, the components amy be molded into a parison for blowing immediately after the melt-kneading, and then blown.

The components (A), (B) and (C) may simultaneously be melt-kneaded, or first separately melt-kneaded and then mixed together. Further, each of the components may be divided into at least two portions, and added to perform melt-kneading.

The blowing of the composition of the present invention may be carried out by the use of the conventional blow molding machine generally used in the blowing of thermoplastic resins according to the customary procedure. That is, the above polyester resin composition is molded into a hollow body by plasticizing the composition by means of an extruder, etc., extruding or injecting the plasticized composition through an annular die into an annular molten or softened preform parison, inserting the parison in a metal mold, blowing air into the inside thereof to inflate the same, and cooling for solidification. Preferably, the polyester resin composition of the present invention is blown at cylinder and die temperatures of 200 to 290°C, especially at 230 to 260°C when the component (A) is polybutylene terephthalate. The metal mold temperature is preferably in the range of 40 to 130°C, still preferably 80 to 100°C. The gas blown into the inside is, for example, air, nitrogen, etc., and is not particularly limited. For economy, air is generally employed. The blowing pressure is preferably in the range of 3 to 10 kg/cm². The blowing may be conducted by the use of a special blowing machine, such as a three-dimensional blowing machine. The composition of the present invention may be blown into at least one layer, and into a multilayer article in which the layer of the composition of the present invention is combined with a layer of another material.

The polyester resin composition of the present invention improves the melt tension, eliminates the drawdown of the parison at the time of blowing and thus markedly improves blowing characteristics, so that a hollow molded article with uniform wall thickness and excellent appearance can be obtained, as compared with the conventional polyester resin and composition thereof. Further, the above effects in blowing characteristics are very favorably retained even after repeated recycling of the composition. In this respect as well, economic advantage is ensured.

The polyester resin composition of the present invention is excellent in mechanical properties and heat resistance, so that it provides hollow molded articles usable-under considerably severe conditions as an intake manifold for cars, suction and exhaust parts around an engine, a container for high temperature fluids, chemicals and solvents, a pipe, a vessel such as a float, a tube (including odd-shaped one), etc.

### [Examples]

Hereinbelow, the present invention will be described in greater detail with reference to the following Examples, which should not be construed as limiting the scope of the present invention.

The thermoplastic polyester (A), the styrenic copolymer (B), the modified polyolefin resin (C), the reaction accelerator (E) for epoxy groups and the polyamide resin used in the Examples are as defined below:

### Component (A)

- PBT:: polybutylene terephthalate (intrinsic viscosity of 1.0)
- PET:: polyethylene terephthalate (intrinsic viscosity of 1.0)

### Component (B) styrenic copolymer

- SG :: styrene/glycidyl methacrylate copolymer (80/20 by weight) (intrinsic viscosity of 0.1)
- SAG:: styrene/acrylonitrile/glycidyl methacrylate copolymer (56/24/20 by weight) (intrinsic viscosity of 0.1)

### Component (C) modified polyolefin resin

- C-1:: modified polyethylene 10 parts by weight of N-(4-(2,3-epoxypropoxy)-3,5-dimethylbenzyl)acrylamide (AXE: produced by Kanegafuchi Chemical Industry Co., Ltd.) as the compound of the formula (II) and 0.15 part by weight of 2,5-dimethyl-2,5-di(t-butylperoxy)hexane as a radical polymerization initiator were added to 100 parts by weight of polyethylene (PE), and premixed in a Henschel mixer for 5 min. The mixture was melt-kneaded in an extruder having a cylinder temperature of 200°C, and pelletized to obtain pellets of a modified polyethylene.
- C-2:: Pellets of a modified polyethylene were prepared in the same manner as that of C-1 above, except that the amount of AXE was 5 parts by weight.
- C-3:: Pellets of a modified polypropylene were prepared in the same manner as that of C-1 about, except that the PE was replaced by polypropylene.

### Component (D): glass fiber

### Component (E): reaction accelerator for epoxy groups

- TBPB:: tetra-n-butylphosphonium bromide

### Component (F): polyamide resin

- N-6 :: nylon 6
- N-12:: nylon 12

The compositions and molded articles were evaluated by conducting the following measurements.

### (1) Melt tension

Using a capillary rheometer, the resin was allowed to flow at 255°C through an orifice having a diameter of 1 mm unless otherwise specified. The load at which the resin was pulled in a drawdown ratio of 10 was measured by the load cell. With respect tot he resin filled with glass fibers, the same measurement was conducted, except that the drawdown ratio was 2.

### (2) Blowing characteristics

### • Drawdown

The time taken for the parison extruded from a blowing machine to have a length of 120 mm and the time taken for the same to have a length of 600 mm were measured, and the ratio of the former to the latter as a drawdown index was determined.

If the resin does not cause drawdown, the drawdown index is 5. On the other hand, if the resin instantaneously causes drawdown, the drawdown index is 1.

### • Rupture at blowing

Whether there was rupture in molded articles at the time of blowing was examined by visual observation.

### • Uniformity of wall thickness of molded article

Each of molded articles was sliced, and the thickness of the wall of te resultant cylinder was measured at three points in each of the upper, middle and lower portions thereof by means of a micrometer. the thickness variance (percentage of difference between maximum value and minimum value to average wall thickness) was determined.

### • Appearance

Smoothness (unevenness) of the surface was evaluated by visual observation. Rankings "excellent" , "good" and "poor" were imparted.

### Examples 1 to 10 and Comparative Examples 1 to 5

The appropriate components listed in Table 1 were well blended in a blender, melt-kneaded at 250°C in a twin screw extruder, and pelletized. Thus, resin composition pellets were obtained.

Pellets were blown on a blowing machine (S-45ND manufactured by Placo Co., Ltd.) at a die (a diameter of 50 mm and a clearance of 3 mm) temperature of 250°C, a metal mold temperature of 80°C and a blowing pressure of 5 kg/cm² unless otherwise specified to thereby obtain cylindrical hollow containers each having an internal volume of 500 ml and an average wall thickness of 2.5 mm. With respect to the cylindrical hollow containers, blowing characteristics [drawdown, rupture at blowing, uniformity of wall thickness of molded article and appearance (roughening and unevenness of surface)] were evaluated. Further, the appropriate blown cylindrical hollow containers were pulverized, and molded again, using the whole amount thereof, into cylindrical hollow containers, of which molding characteristics were evaluated.

For comparison, the above test was repeated with respect to each of the composition in which the component (A) only was used as the resin component and the compositions in which one for the resin components (B) and (C) was omitted. Results are shown in Table 1.

### Examples 11 to 15 and Comparative Examples 6 to 8

The same test and evaluation as those of the above Examples were conducted with respect to the compositions in which the component (A) was polyethylene terephthalate resin (PET) and in which a polyamide was incorporated. Results are shown in Table 2.

### Examples 16 to 18 and Comparative Examples 9 to 11

The same test and evaluation as those of the above Examples were conducted with respect to the compositions in which glass fibers were incorporated as the filler. Results are shown in Table 3.

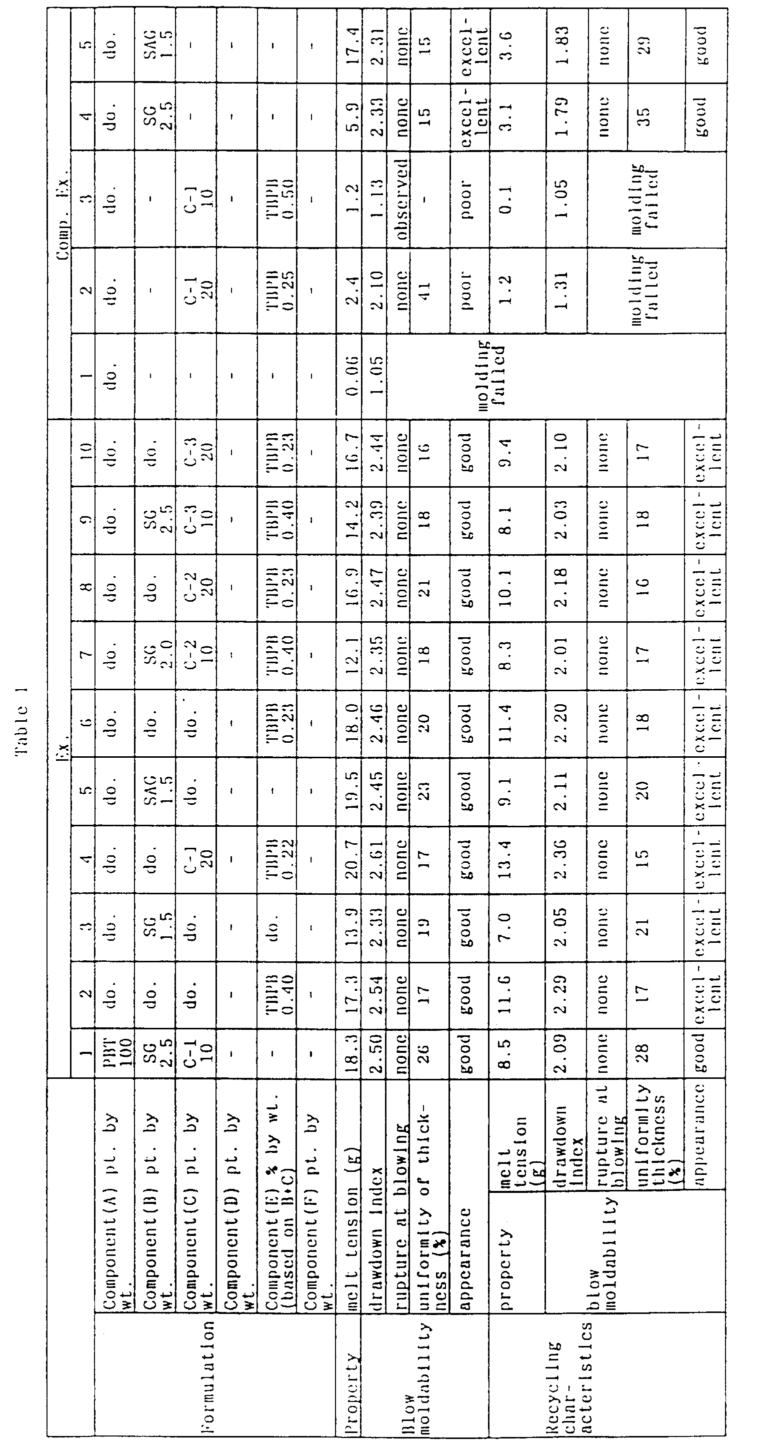

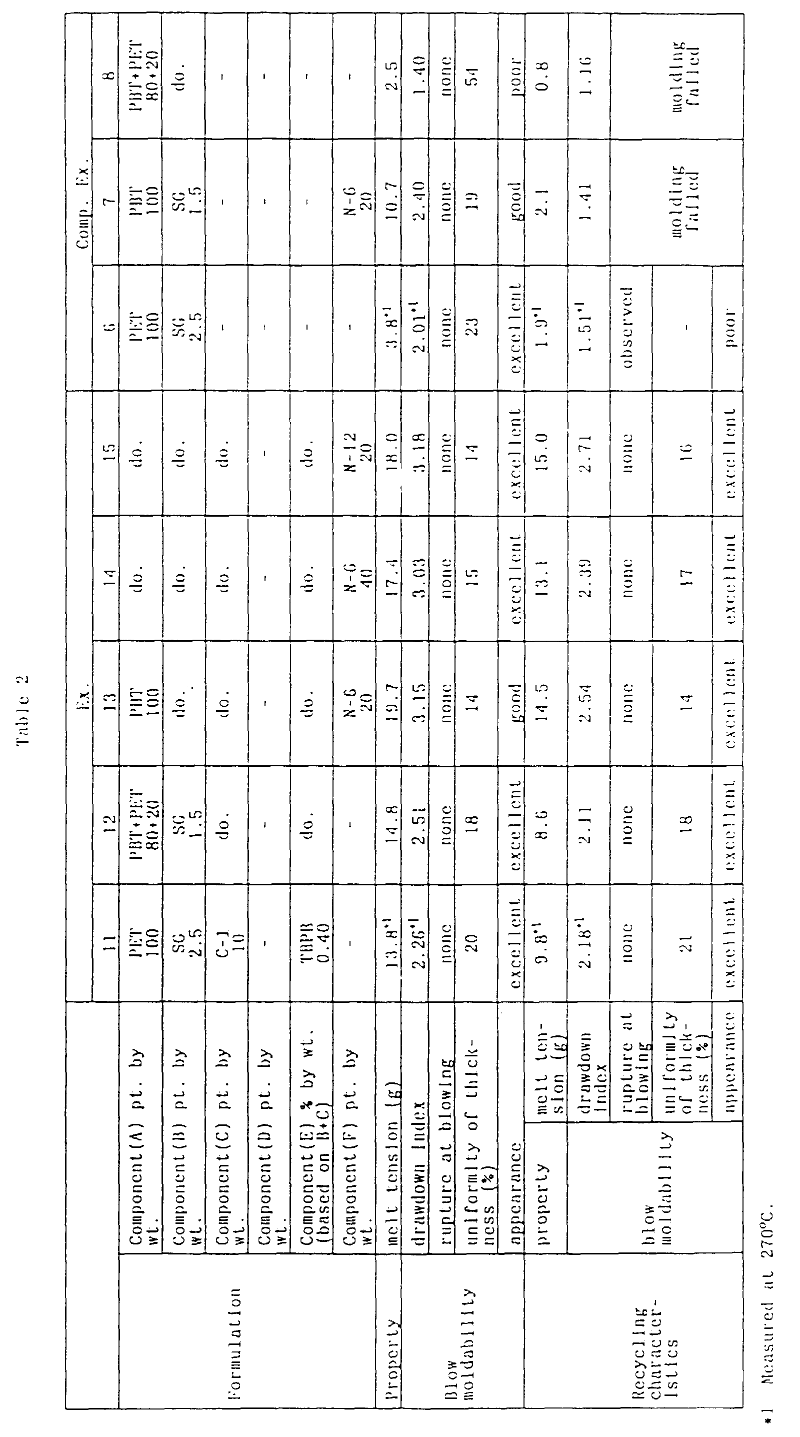

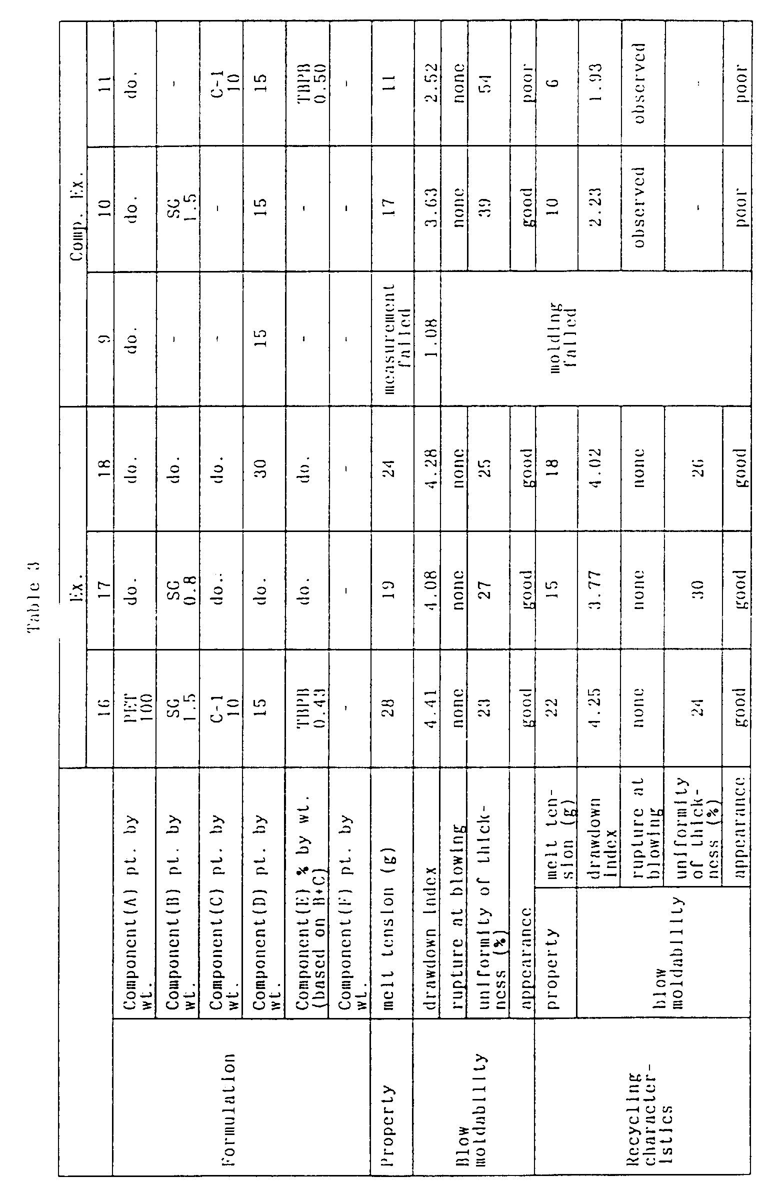

## Claims

1. A polyester resin composition for blowing or extrusion which is prepared by melt-kneading a mixture comprising
(A) 100 parts by weight of a thermoplastic polyester resin prepared mainly from an aromatic dicarboxylic acid or an ester-forming derivative thereof and an aliphatic dihydroxyl compound having 2 to 8 carbon atoms,
(B) 0.2 to 10 parts by weight of a styrenic copolymer comprising 40 to 97% by weight of styrene, 60 to 3% by weight of a glycidyl ester of an α,β-unsaturated acid represented by the following general formula (I), and 0 to 50% by weight of other vinylic monomer: 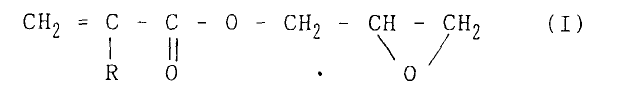 wherein R is a hydrogen atom or an alkyl group,
(C) 1 to 30 parts by weight of a modified polyolefin resin prepared by heating a mixture comprising 100 parts by weight of a polyolefin resin, 0.1 to 15 parts by weight of a glycidyl compound represented by the following general formula (II): 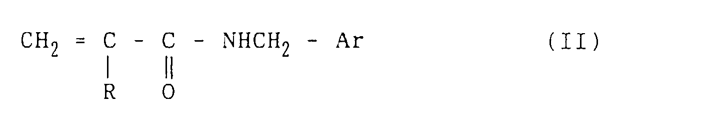 wherein R is a hydrogen atom or an alkyl group; and Ar is an aromatic group having at least one glycidyl group,
and 0.01 to 1.5 parts by weight of a radical polymerization initiator,
and
(D) 0 to 100 parts by weight of at least one fibrous, powdery or flaky filler.

2. The polyester resin composition for blowing or extrusion as set forth in claim 1, wherein the mixture to be melt-kneaded further contains (E) 0.05 to 6% by weight (based on the sum total of the components (B) and (C)) of at least one reaction accelerator for epoxy groups selected from among tertiary amines and their salts, imidazole and its salts, phosphonium salts, and organometallic complexes.

3. The polyester resin composition for blowing or extrusion as set forth in claim 1, wherein said styrenic copolymer (B) is a copolymer containing at least one monomer selected from among acrylonitrile, vinyl chloride, α-methylstyrene, bromostyrene and phenylmaleimide in addition to the styrene and glycidyl ester of an α,β-unsaturated acid represented by the general formula (I).

4. The polyester resin composition for blowing or extrusion as set forth in claim 1, wherein said thermoplastic polyester resin (A) is a polymer or copolymer mainly composed of butylene terephthalate repeating units.

5. The polyester resin composition for blowing or extrusion as set forth in claim 1, wherein said thermoplastic polyester resin (A) is a mixture comprising a polymer mainly composed of butylene terephthalate repeating units and a polymer mainly composed of ethylene terephthalate repeating units.

6. The polyester resin composition for blowing or extrusion as set forth in claim 1, which further contains 1 to 100 parts by weight of a thermoplastic polyamide resin (F).

7. The hollow molded article prepared by blowing the polyester resin composition as set forth in claim 1.

## Patentansprüche

1. Polyester-Harzzusammensetzung zum Blasen oder Extrudieren, die durch das Schmelzkneten einer Mischung hergestellt wird, die
(A) 100 Gew.-Teile eines thermoplastischen Polyesterharzes, hergestellt hauptsächlich aus einer aromatischen Dicarbonsäure oder einem esterbildenden Derivat davon und einer aliphatischen Dihydroxylverbindung mit 2 bis 8 Kohlenstoffatomen,
(B) 0,2 bis 10 Gew.-Teile eines Styrol-Copolymers, umfassend 40 bis 97 Gew.-% Styrol, 60 bis 3 Gew.-% eines Glycidylesters einer α,β-ungesättigten Säure, dargestellt durch die folgende allgemeine Formel (I), und 0 bis 50 Gew.-% eines anderen Vinyl-Monomers: 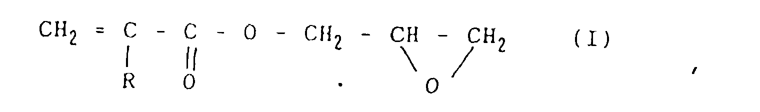 wobei R ein Wasserstoffatom oder eine Alkylgruppe ist,
(C) 1 bis 30 Gew.-Teile eines modifizierten Polyolefin-Harzes, hergestellt durch das Erwärmen einer Mischung, die 100 Gew.-Teile eines Polyolefin-Harzes, 0,1 bis 15 Gew.-Teile einer durch die folgende allgemeine Formel (II): 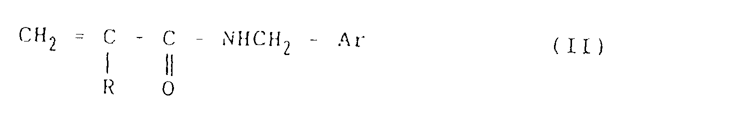 dargestellten Glycidylverbindung umfaßt, wobei R ein Wasserstoffatom oder eine Alkylgruppe ist und Ar eine aromatische Gruppe ist, die wenigstens eine Gycidylgruppe hat,
und 0,01 bis 1,5 Gew.-Teile eines radikalischen Polymerisationsinhibitors
und
(D) 0 bis 100 Gew.-Teile wenigstens eines faserartigen, pulverigen oder flockigen Füllstoffs
umfaßt.

2. Polyesterharz-Zusammensetzung zum Blasen oder Extrudieren nach Anspruch 1, wobei die zu schmelzknetende Mischung weiterhin (E) 0,05 bis 6 Gew.-% (bezogen auf die Gesamtsumme der Komponenten (B) und (C)) wenigstens eines Reaktionsbeschleunigers für Epoxygruppen enthält, der aus tertiären Aminen und deren Salzen, Imidazol und dessen Salzen, Phosphoniumsalzen und organometallischen Komplexen ausgewählt ist.

3. Polyesterharz-Zusammensetzung zum Blasen oder Extrudieren nach Anspruch 1, wobei das Styrol-Copolymer (B) ein Copolymer ist, das wenigstens ein aus Acrylnitril, Vinylchlorid, α-Methylstyrol, Bromstyrol und Phenylmaleinsäureimid ausgewähltes Monomer zusätzlich zu dem Styrol und dem durch die allgemeine Formel (I) dargestellten Glycidylester einer α,β-ungesättigten Säure enthält.

4. Polyesterharz-Zusammensetzung zum Blasen oder Extrudieren nach Anspruch 1, wobei das thermoplastische Polyesterharz (A) ein Polymer oder Copolymer ist, das hauptsächlich aus Butylenterephthalat-Repetiereinheiten besteht.

5. Polyesterharz-Zusammensetzung zum Blasen oder Extrudieren nach Anspruch 1, wobei das thermoplastische Polyesterharz (A) eine Mischung ist, die ein hauptsächlich aus Butylenterephthalat-Repetiereinheiten bestehendes Polymer und ein hauptsächlich aus Ethylenterephthalat-Repetiereinheiten bestehendes Polymer umfaßt.

6. Polyesterharz-Zusammensetzung zum Blasen oder Extrudieren nach Anspruch 1, die weiterhin 1 bis 100 Gew.-Teile eines thermoplastischen Polyamid-Harzes (F) enthält.

7. Hohles Formteil, hergestellt durch das Blasen der Polyesterharz-Zusammensetzung nach Anspruch 1.

## Revendications

1. Une composition de résine polyester pour soufflage ou extrusion, qui est préparée par malaxage à l'état fondu d'un mélange comprenant
(A) 100 parties en poids d'une résine polyester thermoplastique préparée principalement à partir d'un acide dicarboxylique aromatique ou un dérivé formateur d'ester de celui-ci et d'un composé dihydroxylé aliphatique ayant 2 à 8 atomes de carbone,
(B) 0,2 à 10 parties en poids d'un copolymère styrénique comprenant 40 à 97 % en poids de styrène, 60 à 3 % en poids d'un ester glycidylique d'un acide insaturé en α,β représenté par la formule générale (I) suivante, et O à 50 % en poids d'un autre monomère vinylique : 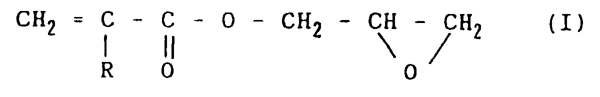 où R est un atome d'hydrogène ou un groupe alkyle,
(C) 1 à 30 parties en poids d'une résine polyoléfinique modifiée, préparée en chauffant un mélange comprenant 100 parties en poids d'une résine polyoléfinique, 0,1 à 15 parties en poids d'un composé glycidylique représenté par la formule générale (II) suivante : 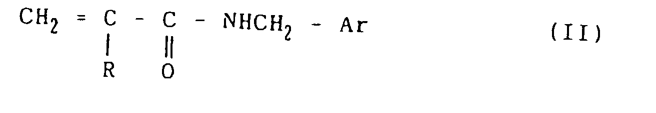 où R est un atome d'hydrogène ou un groupe alkyle ; et Ar est un groupe aromatique portant au moins un groupe glycidyle,
et 0,01 à 1,5 partie en poids d'un initiateur de polymérisation radicalaire,
et
(D) 0 à 100 parties en poids d'au moins une charge en fibres, poudre ou paillettes.

2. La composition de résine polyester pour soufflage ou extrusion telle que définie dans la revendication 1, dans laquelle le mélange devant être malaxé à l'état fondu contient de plus (E) 0,05 à 6 % en poids [par rapport au total des composants (B) et (C)] d'au moins un accélérateur de réaction pour groupes époxy choisi parmi les amines tertiaires et leurs sels, l'imidazole et ses sels, les sels de phosphonium et les complexes organométalliques.

3. La composition de résine polyester pour soufflage ou extrusion telle que définie dans la revendication 1, dans laquelle ledit copolymère styrénique (B) est un copolymère contenant au moins un monomère choisi parmi l'acrylonitrile, le chlorure de vinyle, le α-méthylstyrène, le bromostyrène et le phénylmaléimide, en plus du styrène et de l'ester glycidylique d'acide insaturé en α,β représenté par la formule générale (I).

4. La composition de résine polyester pour soufflage ou extrusion telle que définie dans la revendication 1, dans laquelle ladite résine polyester thermoplastique (A) est un polymère ou copolymère principalement constitué de motifs téréphtalate de butylène récurrents.

5. La composition de résine polyester pour soufflage ou extrusion telle que définie dans la revendication 1, dans laquelle ladite résine polyester thermoplastique (A) est un mélange comprenant un polymère principalement constitué de motifs téréphtalate de butylène récurrents et un polymère principalement constitué de motifs téréphtalate d'éthylène récurrents.

6. La composition de résine polyester pour soufflage ou extrusion telle que définie dans la revendication 1, qui contient de plus 1 à 100 parties en poids d'une résine polyamide thermoplastique (F).

7. L'article moulé creux fabriqué par soufflage de la composition de résine polyester telle que définie dans la revendication 1.
